# NEUE EUROPÄISCHE PATENTSCHRIFT

(11) **EP 0 525 092 B2**
(45) Veröffentlichungstag und Bekanntmachung des Hinweises auf die Entscheidung über den Einspruch: **01.04.1998**
(45) Hinweis auf die Patenterteilung: 22.06.1994
(21) Anmeldenummer: 91908719.7
(22) Anmeldetag: 19.04.1991
(51) Int. Cl.: B09B 1/00

(54) **DEPONIE UND VERFAHREN ZU DEREN HERSTELLUNG**
RUBBISH DUMP AND PROCESS FOR MAKING IT
DECHARGE DE DECHETS ET SON PROCEDE DE FABRICATION

(30) Priorität: 20.04.1990 DE 4012670
(43) Veröffentlichungstag der Anmeldung: 03.02.1993
(73) Patentinhaber: Grabbe, Klaus, Dr., D-38116 Braunschweig (DE)
(72) Erfinder: Grabbe, Klaus, Dr., D-38116 Braunschweig (DE)
(74) Vertreter: von Samson-Himmelstjerna, Friedrich R., Dipl.-Phys.
(86) Internationale Anmeldenummer: EP9100756
(87) Internationale Veröffentlichungsnummer: WO9116153

(56) Entgegenhaltungen:
- WO-A-88/02269
- DE-A- 3 921 066
- US-A- 3 586 624
- US-A- 4 643 111
- US-A- 4 838 733
- TECHNIQUES-SCIENCES-METHODES. Vol. 81, No. 1 January 1986, FR; pages 31-34; J.-L. GARRIDO ET AL: "Un nouveau mode d'exploitation des décharges. Le dépot à haute densité ou compostage in situ"
- Abfallwirtschaft an der TU Berlin, Bd. 3, "Mechanisch-biologische Behandlung von Abfällen im Zusammenhang mit geordneten Deponien", von Prof. Dipl.-Ing. Bernhard Jäger, 1978, Seiten 221 - 233
- Müll und Abfall, "Verminderung der Sickerwasserfrachten und Verlängerung der Nutzungsdauer einer Hausmülldeponie durch Nutzung aerober Abbauvorgänge", von Peter Stillmann und Hans-Jürgen Collins, März 1979, Seiten 61 - 70
- Forum Städte Hygiene, "Mülldeponien und Abfallbeseitigung im Regierungsbezirk Hildesheim", Januar 1977, Seiten 26 und 27
- Kommunalwirtschaft, Physikalisch-chemische Kennwerte über Veränderungen von mechanisch-biologisch aufbereiteten und verpressten Siedlungsabfällen während der Lagerung, von H. Wendtholt, E. Homrighausen, Heft April 1979, Seiten 3 - 12
- Symposium, "Die Deponie - Ein Bauwerk?, von E. E. Kohler, 1978, Seiten 307 - 316
- Abfallwirtschaft in Forschung und Praxis, von Peter Spillmann, Heft 27/1989, Seiten 95/96, 212 - 222, 229 - 252, 291/292

## Beschreibung

Die Erfindung befaßt sich allgemein mit der Lagerung von Reststoffen; insbesondere befaßt sich die Erfindung mit einer Deponie und einem Verfahren zu deren Herstellung.

### Zugrundeliegender Stand der Technik

Es ist bekannt, biogene Reststoffe im Originalzustand in eine Deponie zu verbringen und dort einzulagern. Verdichtungsmaßnahmen dienen dabei der Volumenminderung (Hausmüll) oder der technischen Handhabbarkeit (Klärschlamm). Die Lagerung frischen biogenen Materials führt zu durchnässender Fäulnis, zur Bildung von Faulgasen (Methan, Schwefelwasserstoff) und eines breiten Spektrums von Stinkstoffen. Kostspielige Deponie-Sicherungsmaßnahmen sind notwendig, um diese Nachteile in Kauf nehmen zu können.

Aus dem Dokument "Techniques Sciences Methodes, 81 (1), 31 - 34 (1986)" - GARRIDO, LEROY, ist es beispielsweise bekannt, frisches organisches Material auf einer Deponie zu kompaktieren, und zwar mit dem Ziel einer in-situ-Kompostierung. Diese Kompostierung, auch Direktkompostierung genannt, soll Geruchsbelästigungen oder die Entwicklung von Insektenpopulationen vermeiden. Die Verdichtung, also die Kompaktierung wird hierbei über Zerkleinerung des Materials so gestaltet, daß aerobe Verhältnisse erhalten bleiben. Anaerobie wird lediglich (mißbilligend) in Kauf genommen. Es wird im Verlauf von Jahren ein kompostähnliches Produkt erzeugt. Von einer biologischen Unterlegung des Verfahrens kann nicht gesprochen werden. Das geschilderte Verfahren ist der konventionellen Müllverdichtung ähnlich, mit dem Unterschied, daß die maschinell betriebene Volumenreduktion des biogenen Materials mit einem undefinierten, also mehr oder weniger dem Zufall überlassenen in-situ-Kompostierungsprozeß verknüpft wird.

### Offenbarung der Erfindung

Ausgehend von der Problematik konventionell bewirtschafteter Deponien, zielt die Erfindung darauf ab, eine andere Alt der Lagerung von biogenen organischen Reststoffen zur Verfügung zu stellen.

Erreicht wird dieses Ziel durch eine Deponie, die sich durch eine kompaktierte Einlagerung von zuvor mikrobiell so stabilisiertem Rottegut verschiedenster Genese, daß unter anaeroben Bedingungen kein mikrobieller Stoffumsatz mehr stattfindet, im folgenden Stabilkompost, auszeichnet (Anspruch 1).

In verfahrensmäßiger Hinsicht wird dieses Ziel durch ein Verfahren zur Herstellung einer Deponie erreicht, nach welchem Rottegut verschiedenster Genese, das zuvor so mikrobiell stabilisiert, daß unter anaeroben Bedingungen kein mikrobieller Stoffumsatz mehr stattfindet, im folgenden Stabilkompost, kompaktiert eingelagert wird (Anspruch 13).

Die mikrobielle Stabilisation ist Teil des Rotteprozesses und erfolgt also vor der Einlagerung. Ein Zusatz von Mikroorganismenarten der Kompostflora zum Ausgangsmaterial ist regelmäßig nicht nötig, kann aber in Ausnahmefällen vorteilhaft sein. Die anschließende Kompaktierung kann vor der Einlägerung vorgenommen werden, wenn sich dies anbietet, z.B. wenn mit Schadstoffen belastetes Material bindig ist und mit dem stabilisierten Kompostgut verpreßt werden kann. In der Regel wird aber der Stabilkompost schichtenweise abgewalzt.

Grundlage der erfindungsgemäßen Lehre ist die bewußte Vernetzung physikalischer, chemischer und biologischer Mechanismen des terrestrischen Ökosystems im Sinne umweltbezogener Zielsetzungen. Die erfindungsgemäße Deponie wird nachfolgend auch Ökodeponie oder Inertdeponie genannt. Sie entzieht nämlich organisches Material und Schadstoffe den aktuellen natürlichen Stoffkreisläufen und inertisiert dieses Material unter Volumenreduktion. Die Ökodeponie kann im Falle der Kompostierung unbelasteter Ausgangsstoffe der Bevorratung des erzeugten mikrobiell stoffumsatz-stabilisierten Rottegutes, d.h. Stabilkompost oder Dauerhumus, dienen. Sie kann auch als Pool für die Entsorgung von Schadstoffen benutzt werden, wenn diese in geeigneten Gemengen mit Stabilkompost kompaktiert eingelagert werden können - was aus der Sicht des Kompostes ebenfalls eine Verwendung als Wertstoff darstellt. Die Kompostierung mit anschließender Kompaktierung ist mit einer Volumenreduktion verknüpft, wie sie durch mechanische Verdichtungsmaßnahmen bei konventioneller Deponiebewirtschaftung nicht erreicht wird. Bei der konventionellen Deponiebewirtschaftung mindern hohe Rückstellkräfte der elastischen, zudem oft sperrigen Materialien, die Effizienz der Volumenreduktion.

Die Erfindung stellt insgesamt darauf ab, Stabilkompost durch Kompaktierung in einem zweckentsprechend gestalteten Deponieraum physikalisch, chemisch und biologisch inert zu lagern. Der Stabilkompost wird dabei dadurch erzielt, daß biogene organische Reststoffe durch ein biochemisches Verfahren umgewandelt werden. Das biochemische Verfahren ist der wohldefinierte Kompostierungsprozeß, welcher die biogenen organischen Reststoffe in einen Dauerhumus oder Stabilkompost umwandeln, der unter anaeroben Bedingungen dem mikrobiellen Stoffumsatz entzogen ist. Die kompaktierte Einlagerung des Stabilkompostes stellt eine umweltneutrale Lagerung biogener organischer Reststoffe dar, die sich gravierend von konventionellen Deponien unterscheidet, und zwar sewohl in baulicher Hinsicht als auch in der Art der Bewirtschaftung. Die Reststoffe enthalten durch die vorangegangene biogene Aufbereitung, also den definierten Kompostierungsprozeß, Eigenschaften, die gezielt zur Umweltsicherung beitragen. Dadurch wird die derzeit übliche aufwendige Sicherung von Deponien gegen eine Boden-, Wasser- und Luftbelastung durch reaktives biologisches Material überflüssig und kann durch wesentlich billigere flankierende Maßnahmen ersetzt werden.

Die Erfindung hat folgende Vorteile:
- die pH-Werte des Kompostes im Neutralbereich begünstigen die Festlegung von Schwermetallionen in unlöslichen Verbindungen oder durch Sorption (Bindung) an den Dauerhumus bzw. Stabilkompost. Bei der Kompaktlagerung des Stabilkompostes ist die Immobilisation der Schwermetallionen vollständig;
- die Kompaktierung des Stabilkompostes führt auch zur Festlegung von Stickstoff und Phosphat. Ähnliches gilt auch für Schadaromaten;
- die Ökodeponie kann wegen ihrer umweltneutralen Eigenschaften grundsätzlich auch ohne Untergrunddichtung, also ohne eine den Untergrund abdichtende Deponiesohle auskommen;
- die Festlegung reduzierten Kohlenstoffs im inertisierten Stabilkompost ist als Beitrag zur Verminderung der allgemein bekannten Kohlendioxid-Problematik zu sehen;
- schließlich schont die mit dem Stabilkompost verbundene Volumenreduktion Deponieraum.

Die Erfindung wird nachfolgend noch näher erläutert, auch anhand von Ausführungsbeispielen. Hierbei wird auf die beigefügte schematische Zeichnung Bezug genommen.

### Kurze Beschreibung der Zeichnungen

In der Zeichnung zeigen
- Abb. 1: die Stoffumsatzdynamik während der Kompostierung;
- Abb. 2: den Stoffumsatz in der Ökodeponie; und
- Abb. 3: den Aufbau einer Ökodeponie für Klärschlammkompost.

### Wege zur Ausführung der Erfindung

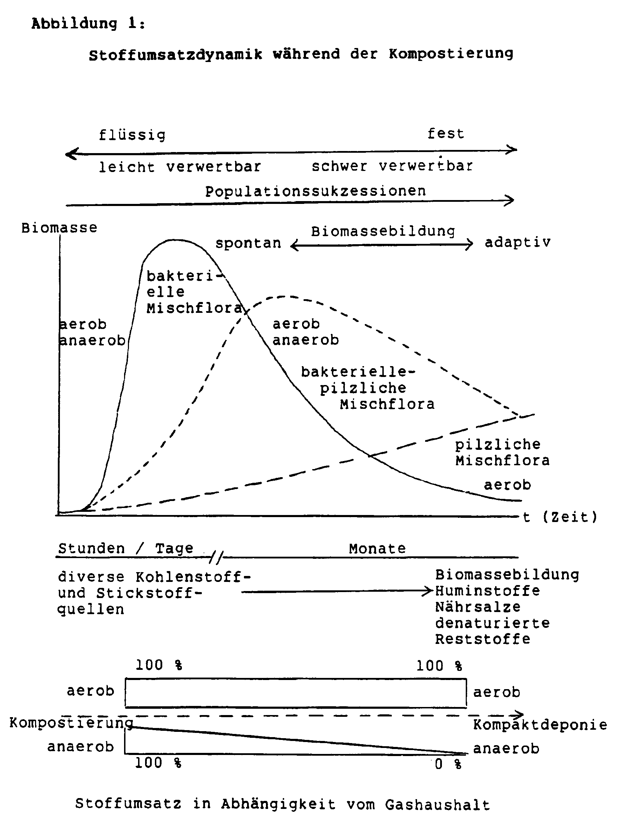

Rottegut erhält man durch Kompostierung, nämlich Verrottung organischer Substanz unter natürlichen Bedingungen. Dabei läuft der mikrobielle Stoffumsatz nach einem wohldefinierten Muster ab, das in Abb. 1 näher dargestellt ist. Dieser Stoffumsatz kann durch technische Maßnahmen und durch die Kontrolle der Prozeßführung intensiviert werden.

Zuerst werden dabei die leichtverwertbaren Kohlenstoff- und Stickstoffverbindungen mineralisiert. Da dieser Prozeß rasch verläuft, kommt es zu Erwärmungen bis zu 80°C. Diese Phase der Kompostierung dient der Hygienisierung und dem Abbau der Stinkstoffe.

Nach dem Abbau jener Stoffmassen, die vorzugsweise von der bakteriellen Mischflora abgebaut werden können, kommt es zu Übergangspopulationen. Diese bestehen aus Bakterien und Pilzen, wie in Abb. 1 dargestellt. Danach mündet der Kompostierungsprozeß in die Phase der praktisch ausschließlichen Verrottung. In dieser Phase bauen fast ausschließlich aerobe Pilzfloren die Lignozellulose langsam ab.

Für den Kompostierungsprozeß ist charakteristisch, daß der Stoffumsatz zu Beginn sowohl unter aeroben als auch unter anaeroben Bedingungen ablaufen kann. Dies ist der Grund, warum deponiertes Frischmaterial zur Bildung von Faulgasen führt. Die Kompostierung dagegen mündet in einen Stoffumsatz ein, der strikte Aerobie erforderlich macht, wie in Abb 1 dargestellt. In diesem Stadium kommt der mikrobielle Stoffumsatz vollständig zum Erliegen, wenn die Sauerstoffzufuhr unterbunden wird. Dies kann leicht demonstriert werden. Ein Plastiksack, in dem Stabilkompost luftdicht verpackt ist, nimmt nach einiger Zeit das Aussehen einer vakuumversiegelten Erdnußpackung an. Durch den Sauerstoffverbrauch der Mikroflora entsteht nämlich im Plastiksack ein Unterdruck. Würde das Stadium des Stabilkompostes noch nicht erreicht worden seinkönnte also unter den herrschenden Bedingungen noch eine anaerobe Mikroflora tätig werden - käme es nachgewiesenermaßen zu Gasbildungen (Kohlendioxid, Methan, Geruchstoffe). Der Sack würde sich aufblähen.

Während der Kompostierung wird unter Volumenreduktion (ca. 50% Rotteverlust) Dauerhumus gebildet, der folgenden Stoffumsatz zur Grundlage hat. Der oxydative Abbau des dreidimensional vernetzten Lignin-Makromoleküls verläuft über Bruchstücke, die entweder vollständig mineralisiert oder zusammen mit mikrobiell gebildeten autooxydablen Phenolen zu Huminstoffen repolymerisiert werden. Dieser biologisch induzierte und chemisch katalysierte Prozeß ist in die Dynamik des Stoffumsatzes dergestalt eingebunden, daß ein Kompost entsteht, dessen organische Substanz eine zunehmende Persistenz gegen den mikrobiellen Abbau unter aeroben Bedingungen aufweist. Dieses Stadium ist die stoffliche Voraussetzung für die erfindungsgemäße Inertisierung des Stabilkompostes. Die Inertisierung wird durch dessen kompaktierte Einlagerung in der Ökodeponie erreicht. Die kompaktierte Einlagerung gewährleistet anaerobe Bedingungen.

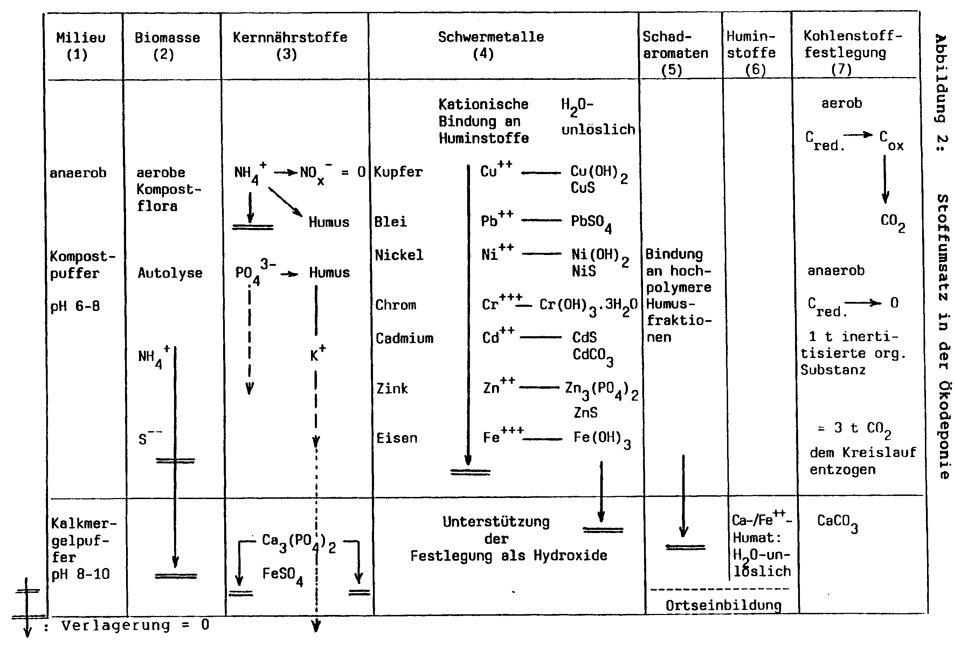

Die Einlagerung des Stabilkompostes in kompaktiertem Zustand unterbindet den konvektiven Gasaustausch. Im Zuge der ausklingenden Stoffwechseltätigkeit aerober Pilzfloren geht das Milieu sehr rasch in Anaerobie über. Die ursprünglich Sauersteffabhängige, lebende Biomasse geht in Autolyse über, wobei stickstoff- und Schwefelhaltige Verbindungen freigesetzt werden. Die Autolyseprodukte dienen der anaeroben Folgeflora, die aus Mangel an verwert baren organisch gebundenem Kohlenstoff kaum ins Gewicht fällt, als Nährstoffgrundlage. Dabei wird Ammoniak freigesetzt, das bei pH-Werten um 7.0 überwiegend als Ammonium-N an den Dauerhumus sorbiert wird - siehe Abb. 2 (1-3). Unter den herrschenden reduktiven Bedingungen entsteht Schwefelwasserstoff, der mit Schwermetallionen unlösliche Sulfide bildet, siehe Abb. 2 (4). Danach geht der Stabilkompost mikrobiell in einen absoluten Ruhezustand über, da durch die Kompaktierung die Rückkehr in einen aeroben Zustand unterbunden ist.

Der kompaktierte Stabilkompost kann mit einer Torflagerstätte verglichen werden. Neben der natürlichen Inertisierung organischer Substanz gibt es auch Beispiele für die Konservierung, die anthropogenen Ursprungs ist, z.B. Huminstoffe als Relikte früher Siedlungen. Selbst intakte Lignozellulose kann dem mikrobiellen Stoffumsatz entszogen werden, wie sich an Knüppeldämmen in Tonablagerungen (Luftabschluß) und an Holz unter Wasser (Pfahlbauten), Stadtgründungen, z.B. Brügge (Belgien), Venedig (Italien) zeigen läßt. Gelagerte Baumstämme lassen sich durch Beregnung wirksam schützen.

Die pH-Werte des Stabilkompostes im Neutralbereich begünstigen die Festlegung von Schwermetallionen in unlöslichen Verbindungen oder durch Bindung (Sorption) an den Dauerhumus - siehe Abb. 2 (4). Daher lassen sich aus Rottegut, das für die Bodenverbesserung verwendet wird, kaum Schwermetalle auswaschen. Bei der Kompaktlagerung des stabilisierten Rottegutes, d.h. des Stabilkompostes, ist die Immobilisation vollständig, da weder mikrobiell induzierte Mobilisationen wegen des Ausschlusses oxidativer Stoffumsetzungen noch Wasserverlagerungen stattfinden. So verhindert allein schon das hohe Wasserspeicherungsvermögen der Kompostoberfläche bei starken Regenfällen einen Wasserdurchsatz in die Tiefe, während die Kapillarität des Kompostes an der Oberfläche die Wasserverdunstung sogar fördert.

Die Kompaktierung des Stabilkompestes führt auch zur Festlegung von Stickstoff und Phosphat, siehe Abb. 2 (3). Ähnliches gilt für Schadaromaten, siehe Abb. 2 (5), die entweder sorptiv gebunden werden oder bereits während der Kompostierung in den mikrobiellen Stoffumsatz einbezogen wurden.

Die Aromaten-abbauenden Enzymsysteme sind unspezifisch genug, um auch synthetische Aromatensysteme an den Dauerhumus irreversibel zu binden.

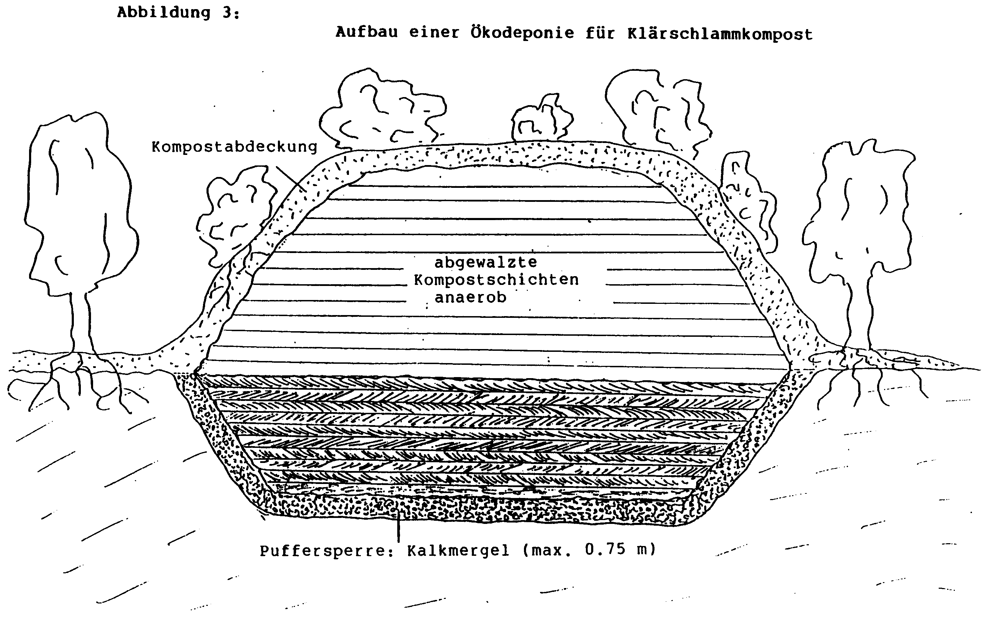

Die Ökodeponie, siehe Abb. 3, kann grundsätzlich ohne Untergrunddichtung auskommen. Um jedoch jedes Risiko auch in den Randbereichen auszuschalten, kann eine Pufferzone angelegt werden, die eine zusätzliche Absicherung gegen Schadstoffverlagerungen darstellt Im Gegensatz zu dem starren System der konventionellen Untergrundabdichtung, kann die genannte Pufferzone dynamisch auf Verformungen reagieren und aufgrund ihrer physikalischen und chemischen Eigenschaften selbst dichtend wirken.

Einen umweltrelevanten Aspekt besonderer Art besitzt die Ökodeponie im Hinblick auf die Kohlendioxid-Problematik. Bekanntlich gibt es keine physikalischen oder chemischen Methoden, Kohlendioxid aus dem aktuellen Gashaushalt der Stoffkreisläufe zu entfernen. Die Festlegung reduzierten Kohlenstoffs im erfindungsgemäß inertisierten Dauerhumus liefert einen einzigartigen Beitrag zur Verminderung des Kohlendioxid-Überschusses - siehe Abb. 2 (7).

Die erfindungsgemäße Inert-Deponie funktioniert auf der Basis der Einlagerung von Komposten im Dauerhumuszustand. Die Inertisierung besitzt nicht nur einen hohen ökologischen Stellenwert, sondern ist auch als Verfahren besonders wirtschaftlich. Die erzielte Volumenreduktion schont Deponieraum, verbilligt die Deponiegestaltung und erleichtert die Standortwahl.

Voraussetzung für die erfindungsgemäße Herstellung der Ökodeponie ist die Bildung von Stabilkompost bzw. Dauerhumus, der vorzugsweise unter anaeroben Bedingungen dem Stoffumsatz entzogen ist. Dieser Zustand wird bevorzugt mit entsprechenden Analysemethoden bestimmt.

Bevorzugt wird der Stabilkompost in der Deponie lagenweise kompaktiert, vorzugsweise mittels geeigneter Maschinen, um eine hohe Dichte zu erreichen (Anspruch 14). Nach einem weiteren Ausführungsbeispiel der Erfindung wird der Stabilkompost vorverdichtet und/oder an Ort und Steile festgewalzt (Anspruch 15). In Abhängigkeit von der technischen Realisation der Kompostierung ist eine Vorverdichtung von Stabikomposten vor allem dann wünschenswert, wenn Zuschlagstoffe (Anspruch 6) unter den verschiedensten Gesichtspunkten vor der endgültigen Einlagerung optimal vermengt werden sollen.

Bevorzugt wird der Stabilkompost in wenigstens zwei Kompartimenten der Deponie kompaktiert engelagert. Dabei ist es von Vorteil, diese beiden Kompartimente durch eine Zwischenschicht voneinander zu trennen, die Materialien mit Verfestigungs-, Sorptions- und/oder Puffereigenschaften enthält oder daraus besteht. Die genannten Maßnahmen dienen der zusätzlichen Umweltsicherungen und bieten vor allem Vorteile bei der Lagerung schadstoffbelasteter Komposte (Ansprüche 2 und 16).

Entsprechendes gilt für die Deponiesohle. Hierdurch wird vor allem der Auslaugung durch Staunässe aus dem Deponieuntergrund vorgebeugt (Ansprüche 3 und 17).

Weiterhin ist es von Vorteil, daß die Oberfläche des kompaktiert eingelagerten Stabilkompostes, also die Oberfläche der Ökodeponie aus einem Material besteht, das ebenfalls Verfestigungs-, Sorptions- und/oder Puffereigenschaften aufweist. Die inerte Kompost-Kompaktdeponie, also die Ökodeponie bildet nämlich ohne eine derartige Oberflächenabdeckung ein nach oben offenes System im Übergangsbereich zur Vegetation. Dies bedeutet, daß das Einwachsen von Wurzeln, die Tätigkeit von Bodentieren oder atmosphärische Einflüsse Veränderungen in den Deponierandzonen bewirken können. Die genannte Oberflächenabdeckung verhindert diese unkontrollierbaren Einflüsse; zumindest wirkt sie Ihnen entgegen (Ansprüche 4 und 18).

Nach einem weiteren Ausführungsbeispiel der Erfindung wird der Stabilkompost mit kompaktierungsfördernden, insbesondere strukturgebenden Verdichtungs- oder Vernetzungsmitteln versetzt. Diese Maßnahme verbessert die Verdichtungseigenschaften des Stabilkompostes, insbesondere wenn die Verdichtung oder Kompaktierung maschinell erfolgt (Ansprüche 5 und 19). Die strukturgebenden Verdichtungsmittel enthalten dabei bevorzugt Materialien mit Verfestigungs-, Sorptions- und/oder Puffereigenschaften oder bestehen aus diesen. Auch diese Maßnahmen dienen wiederum der zusätzlichen Umweltsicherung (Ansprüche 6 und 20).

Nach einem weiteren bevorzugten Ausführungsbeispiel der Erfindung enthalten die Zwischenschicht, die Deponiesohle, die Deponie-Oberflächenabdeckung und/oder die strukturgebenden Verdichtungsmittel organische und/oder anorganische Zuschlagstoffe oder bestehen aus diesen. Als Zuschlagstoffe eignen sich im besonderen Maße geschreddertes Holu, Lignozellulose, Mineralgemische, Ton oder ein Gemisch davon (Ansprüche 7 und 21).

Als Mineralgemisch eignet sich auch aufbereiteter Bauschutt, insbesondere für die Zwisohenschichten zwischen den Deponiekompartimenten. Grundsätzlich wäre auch das Einziehen von Folien zwischen den Kompartimenten möglich.

Nach einem weiteren bevorzugten Ausführungsbeispiel sind die Zuschlagstoffe kalkhaltige Mineralgemische, etwa Kalkmergel und/oder Gipsbruch. Dabei sind die kalkhaltigen Mineralgemische bevorzugt mit zusätzlichen Additiven, wie Eisensulfat versetzt. Derartige Zuschlagstoffe bewirken nicht nur eine Festlegung verlagerter organischer und anorganischer Kompostkomponenten, sondern begünstigen im Rahmen der Erfindung auch die Verfestigung durch die Bildung ortsteinähnlicher Aushärtungen. Ortstein entsteht bekanntlich, wenn Huminstoffe mit Bodenbestandteilen über eine Kolloidbildung Aluminium-, Eisen- und Calciumhumate bilden, etwa in der Deponiesohle (Ansprüche 9, 10, 23 und 24).

Als strukturgebende Verdichtungsmittel eignen sich je nach homogenitätsgrad des Stabilkompostes Reststoffe, die fast ausschließlich aus Lignozellulose bestehen. Hierzu zählen neben den bereits genannten Zuschlagstoffen Reststoffe aus der Aufbereitung nachwachsender Rohstoffe oder Holzspäne (organische Reststoffe). Der Reststoff Steinwolle ist beispielsweise als anorganischer Zuschlag verwendbar.

Der Stabilkompost kann auch beispielsweise durch Verschlämmen kompaktiert bzw. verdichtet werden. Hierbei können die Kompostschichten durch gelegentliches Verschlämmen an den aktuellen Oberflächen während des Deponieaufbaues hochverdichtet werden (Anspruch 27). Auch der Zusatz von Lignosulfonsäure oder Rotschlamm verbessert die Kompaktierung (Anspruch 28). Es hat sich auch als vorteilhaft erwiesen, die Zuschlagstoffe mit Stabilkompost zu vermischen. Unter anderem werden hierdurch die Zuschlagstoffe mit den Huminstoffen angereichert (Ansprüche 8 und 22).

Nach einem weiteren Ausführungsbeispiel der Erfindung enthalten oder bestehen die Trenn- bzw. Zwischenschichten zwischen den Kompartimenten, die Deponiesohle, die Deponie-Oberflächenabdeckung und/oder die strukturgebenden Verdichtungsmittel (aus) Materialien oder Zuschlagstoffen, die nach dem DCR (Dispersed-Chemical-Reaction)-Verfahren behandelt worden sind (Ansprüche 11 und 25).

Das DCR-Verfahren wurde von Bölsing entwickelt und ist in der EP 326 561-A beschrieben worden. Auf den Inhalt dieser Druckschrift wird ausdrücklich Bezug genommen. Nach dem DCR-Verfahren werden organische und anorganische Schadstoffe (z.B. Mineralöle, Aromaten, Schwermetalle) durch Applikation hydrophoben Calciumoxids kombiniert mit geeigneten Trägermaterialien, z.B. Ton,und Abfangreagenzien in molekular-disperser Form festgelegt. Der Wechsel zwischen hydrophoben und hydrophilen Eigenschaften schließt die chemische Reaktion mit Schadstoffen ein.

Die in den Ansprüchen 2 bis 10 und 16 bis 24 dargestellten zusätzlichen Sicherungsmaßnahmen lassen sich in Kombination mit dem DCR-Verfahren noch effizienter gestalten. Der Vorteil besteht darin, daß die Mächtigkeit und Qualität der Sicherungsschichten nicht nur auf die ihnen eigenen chemischen Eigenschaften, z.B. Bildung unlöslicher Calciumverbindungen mit Huminsäuren zu Humaten, abgestellt werden. Vielmehr können sie in Abhängigkeit von den potentiellen Schadstofffrachten für die einzelnen Kompartimente variabel ausgestaltet werden. Hierzu dienen stöchiometrische Berechnungen als Grundlage für die Konzentration der applizierten Abfangreagenzien (z.B. Eisensulfat, Sulfid). Die Kombination einer chemischen Basis mit zweckdienlich reagierenden, chemisch aufgebauten molekular-dispersen Matrices stellt ein dynamisch wirkendens, synergistisches System dar. In den Zuschlagstoffen der Deponiesohle, der Deponie-Oberflächenabdekkung oder der Zwischenschichten enthaltenes Calciumoxid wird nach Behandlung mit dem DCR-Verfahren in Calciumcarbonat umgewandelt, was zu einer zunehmenden Aushärtung der entsprechenden Schichten führt. Zusammen mit einem hohen pH-Wert gewinnen diese Schichten beispielsweise also die Deckschicht, eine Zusatzfunktion als Barriere.

Das Prinzip der molekular-dispersen Verteilung von Reagenzien im Sohlenbereich, in den Zwischenschichten oder in der Oberflächenabdeckung der Deponie läßt sich auch auf den Stabilkompost selbst übertragen. Hierbei können über die Wahl der Reagenzien autostabilisierende Systeme etabliert werden, die Milieuveränderungen kompensieren. So können Pufferungssysteme das Abgleiten in solche pH-Bereiche verhindern, die zu veränderten Löslichkeiten bei ausgefällten bzw. festgelegten Schadstoffen führen oder etwa das Einsetzen mikrobieller Aktivitäten über eine schleichende milieuveränderung begünstigen.

Ausgehend von diesen Überlegungen wird nach einem bevorzugten Ausführungsbeispiel der Erfindung der Stabilkompost selbst nach dem DCR-Verfahren behandelt, etwa mit einem breiten Spektrum von Abfangreagenzien oder gezielt mit speziellen Reagenzien, beispielsweise zur Bildung unlöslicher Sulfid-Verbindungen oder metallorganischer Komplexe. Hierdurch können Schadstofffrachten inertisiert, Stoffeinträge neutralisiert und die Unterbindung mikrobieller Aktivitäten flankierend begleitet werden (Ansprüche 12 und 26).

Nach einem weiteren bevorzugten Ausführungsbeispiel wird der Stabilkompost vor seiner Kompaktierung einer Trocknung unterworfen, etwa einer natürlichen Trocknung der Mieten, ggf. unter Dach, oder einer Zwangstrocknung. Hierdurch wird die Kompaktierung auf der Deponie erleichtert (Anspruch 29).

## Patentansprüche

1. Deponie, **gekennzeichnet** durch eine kompaktierte Einlagerung von zuvor mikrobiell so stabilisiertem Rottegut verschiedenster Genese, daß unter anaeroben Bedingungen kein mikrobieller Stoffumsatz mehr stattfindet, im folgenden Stabilkompost.

2. Deponie nach Anspruch 1, gekennzeichnet durch wenigstens zwei Kompartimente mit kompaktiert eingelagertem Stabilkompost und eine Verfestigungs-, Sorptions- und/oder Puffer-Eigenschäften aufweisende Zwischenschicht zwischen den Kompartimenten.

3. Deponie nach Anspruch 1 oder 2, gekennzeichnet durch eine Deponiesohle aus einem Verfestigungs-, Sorptions- und/oder Puffer-Eigenschaften aufweisenden Material.

4. Deponie nach wenigstens einem der vorstehenden Ansprüche, dadurch gekennzeichnet, daß die Oberfläche der Deponie mit einem Verfestigungs-, Sorption- und/oder Puffereigenschaften aufweisenden Material abgedeckt ist.

5. Deponie nach wenigstens einem der vorstehenden Ansprüche, dadurch gekennzeichnet daß, der Stabilkompost mit kompaktierungsfördernden, insbesondere strukturgebenden Verdichtungsmitteln versetzt ist.

6. Deponie nach Anspruch 5, dadurch gekennzeichnet, daß die strukturgebenden Verdichtungsmittel Materialien mit Verfestigungs-, Sorptions- und/oder Puffereigenschaften sind.

7. Deponie nach wenigstens einem der Ansprüche 2 bis 6, dadurch gekennzeichnet, daß die Zwischenschicht. die Deponiesohle, die Deponie-Oberflächenabdeckung und/oder die strukturgebenden Verdichtungsmittel organische und/oder anorganische Zuschlagstoffe enthalten oder aus diesen bestehen, insbesondere geschreddertes Holz, Lignozellulose, Mineralgemische, Ton oder ein Gemisch davon.

8. Deponie nach Anspruch 7, dadurch gekennzeichnet, daß die Zuschlagstoffe mit Stabilkompost vermischt sind.

9. Deponie nach Anspruch 7 oder 8, dadurch gekennzeichnet, daß die Zuschlagstoffe kalkhaltige Mineralgemische sind.

10. Deponie nach Anspruch 9, dadurch gekennzeichnet, daß die kalkhaltigen Mineralgemische mit zusätzlichen Additiven, wie Eisensulfat, versetzt sind.

11. Deponie nach wenigstens einem der Ansprüche 2 bis 10, dadurch gekennzeichnet, daß die Zwischenschicht, die Deponiesohle, die Deponie-Oberflächenabdeckung und/oder die strukturgebenden Verdichtungsmittel nach dem DCR (Dispersed-Chemical-Reaction)-Verfahren behandelte Materialien oder Zuschlagstoffe enthalten oder aus diesen bestehen.

12. Deponie nach wenigstens einem der vorstehenden Ansprüche, gekennzeichnet durch einen nach dem DCR-Verfahren behandelten Stabilkompost.

13. Verfahren zur Herstellung einer Deponie, **dadurch gekennzeichnet,** daß Rottegut verschiedenster Genese, das zuvor mikrobiell so stabilisiert wurde, daß unter anaeroben Bedingungen kein mikrobieller Stoffumsatz mehr stattfindet, im folgenden Stabilkompost, kompaktiert eingelagert wird.

14. Verfahren nach Anspruch 13, dadurch gekennzeichnet. daß der Stabilkompost schichtweise kompaktiert eingelagert wird.

15. Verfahren nach Anspruch 13 oder 14, dadurch gekennzeichnet. daß der Stabilkompost vorverdichtet und/oder an Ort und Stelle festgewalzt wird.

16. Verfahren nach wenigstens einem der Ansprüche 13 bis 15, dadurch gekennzeichnet, daß der Stabilkompost in wenigstens zwei Kompartimenten kompaktiert eingelagert wird und die beiden Kompartimente durch wenigstens eine Verfestigung-, Absorptions- und/oder Puffereigenschaften aufweisende Zwischenschicht voneinander getrennt werden.

17. Verfahren nach wenigstens einem der Ansprüche 13 bis 16, gekennzeichnet durch die Verwendung einer Deponiesohle aus einem Verfestigungs-, Sorptions- und/oder Puffereigenschaften aufweisenden Material.

18. Verfahren nach wenigstens einem der Ansprüche 13 bis 17, gekennzeichnet durch die Verwendung einer Oberflächenabdeckung mit einem Verfestigungs-, Sorptions- und/oder Puffereigenschaften aufweisenden Material.

19. Verfahren nach wenistens einem der Ansprüche 13 bis 18, dadurch gekennzeichnet, daß der Stabilkompost mit kompaktierungsfördernden, insbesondere strukturgebenden Verdichtungsmitteln versetzt wird.

20. Verfahren nach Anspruch 19, dadurch gekennzeichnet, daß als Verdichtungsmittel Materialien mit Verfestigungs-, Sorptions- und/oder Puffereigenschaften verwendet werden.

21. Verfahren nach wenigstens einem der Ansprüche 16 bis 20, dadurch gekennzeichnet, daß die Zwischenschicht, die Deponiesohle, die Deponie-Oberflächenabdeckung und/oder die strukturgebenden Verdichtungsmittel mit organischen und/oder anorganischen Zuschlagstoffen versetzt werden, oder aus diesen bestehen, insbesondere geschreddertes Holz, Lignozellulose, Mineralgemische, Ton oder ein Gemisch davon.

22. Verfahren nach Anspruch 21, dadurch gekennzeichnet, daß die Zuschlagstoffe mit Stabilkompost vermischt werden.

23. Verfahren nach Anspruch 21 oder 22, dadurch gekennzeichnet, daß als Zuschlagstoffe kalkhaltige Mineralgemische verwendet werden.

24. Verfahren nach Anspruch 23, dadurch gekennzeichnet, daß die kalkhaltigen Mineralgemische mitzusätzlichen Additiven, wie Eisensulfat, versetzt werden.

25. Verfahren nach wenigstens einem der Ansprüche 16 bis 24, dadurch gekennzeichnet. daß für die Herstellung der Zwischenschicht, der Deponiesohle. der Deponie-Oberflächenabdeckung und/oder der strukturgebenden Verdichtungsmittel nach dem DCR (Dispersed Chemical Reaction)-Verfahren behandelte Materialien verwendet werden.

26. Verfahren nach einem der Ansprüche 13 bis 25, dadurch gekennzeichnet, daß der Stabilkompost selbst nach dem DCR-Verfahren behandelt wird.

27. Verfahren nach wenigstens einem der Ansprüche 13 bis 26, dadurch gekennzeichnet, daß der Stabilkompost durch Verschlämmen kompaktiert bzw. verdichtet wird.

28. Verfahren nach wenigstens einem der Ansprüche 13 bis 27, dadurch gekennzeichnet, daß zur Kompaktierung des Stabilkompostes Lignosulfonsäure oder Rotschlamm zugesetzt wird.

29. Verfahren nach wenigstens einem der Ansprüche 13 bis 28, dadurch gekennzeichnet, daß der Stabilkompost vor seiner Kompaktierung einer Trocknung unterworfen wird.

## Claims

1. A dump, **characterised by** a compacted storage of rotted material of very different origins, which has previously undergone microbial stabilisation in such a way that under anaerobic conditions no more microbial metabolism takes place, hereinafter referred to as stabilised compost.

2. A dump according to Claim 1,
**characterised by** at least two compartments having stabilised compost stored in the compacted state and an intermediate layer, comprising solidifying, sorption and/or buffer properties, between the compartments.

3. A dump according to Claim 1 or 2,
**characterised by** a dump base made from a material comprising solidifying, sorption and/or buffer properties.

4. A dump according to at least one of the preceding Claims,
**characterised in that** the surface of the dump is covered with a material comprising solidifying, sorption and/or buffer properties.

5. A dump according to at least one of the preceding Claims,
**characterised in that** the stabilised compost is treated with compacting agents which promote compacting, and in particular which provide structure.

6. A dump according to Claim 5,
**characterised in that** the structure-providing compacting agents are materials having solidifying, sorption and/or buffer properties.

7. A dump according to at least one of Claims 2 to 6,
**characterised in that** the intermediate layer, the dump base, the surface covering of the dump and/or the structure-providing compacting agents contain organic and/or anorganic aggregates or consist thereof, in particular shredded wood, lignocellulose, mineral mixtures, clay or a mixture thereof.

8. A dump according to Claim 7,
**characterised in that** the aggregates are mixed with stabilised compost.

9. A dump according to Claim for 8,
**characterised in that** the aggregates are calcareous mineral mixtures.

10. A dump according to Claim 9,
**characterised in that** the calcareous mineral mixtures are treated with additional additives, such as iron sulphate.

11. A dump according to at least one of Claims 2 to 10,
**characterised in that** the intermediate layer, the dump base, the surface covering of the dump and/or the structure-providing compacting agents contain materials or aggregates treated in accordance with the DCR (dispersed chemical reaction) method or consist thereof.

12. A dump according to at least one of the preceding Claims,
**characterised by** a stabilised compost treated according to the DCR method.

13. A process for producing a dump, **characterized in that** rotted material of very different origins which has previously undergone microbial stabilisation in such a way that under anaerobic conditions no more microbial metabolism takes place, hereinafter referred to as stabilised compost, is stored in the compacted state.

14. A process according to Claim 13,
**characterised in that** the stabilised compost is stored layer by layer in the compacted state.

15. A process according to Claim 13 or 14,
**characterised in that** the stabilised compost is precompressed and/or rolled until hard on the spot.

16. A process according to at least one of Claims 13 to 15,
**characterised in that** the stabilised compost is stored in the compacted state in at least two compartments and the two compartments are separated from one another by at least one intermediate layer comprising solidifying, absorption and/or buffer properties.

17. A process according to at least one of Claims 13 to 16,
**characterised by** the use of a tip base made from a material comprising solidifying, sorption and/or buffer properties.

18. A process according to at least one of Claims 13 to 17,
**characterised by** the use of a surface covering having a material comprising solidifying, sorption and/or buffer properties.

19. A process according to at least one of Claims 13 to 18,
**characterised in that** the stabilised compost is treated with compacting agents which promote compacting, in particular which provide structure.

20. A process according to Claim 19,
**characterised in that** materials having solidifying, sorption and/or buffer properties are used as compacting agents.

21. A process according to at least one of Claims 16 to 20,
**characterised in that** the intermediate layer, the tip base, the surface covering of the tip and/or the structure-providing compacting agents are treated with organic and/or anorganic aggregates, or consist thereof, in particular shredded wood, lignocellulose, mineral mixtures, clay or a mixture thereof.

22. A process according to Claim 21,
**characterised in that** the aggregates are mixed with stabilised compost.

23. A process according to Claim 21 or 22,
**characterised in that** calcareous mineral mixtures are used as aggregates.

24. A process according to Claim 23,
**characterised in that** the calcareous mineral mixtures are treated with additional additives, such as iron sulphate.

25. A process according to at least one of Claims 16 to 24,
**characterised in that** materials treated in accordance with the DCR (dispersed chemical reaction) process are used for the production of the intermediate layer, the dump base, the surface covering of the dump and/or the structure-providing compacting agents.

26. A process according to one of Claims 13 to 25,
**characterised in that** the stabilised compost is itself treated by the DCR process.

27. A process according to at least one of Claims 13 to 26,
**characterised in that** the stabilised compost is compacted or respectively compressed by silting up.

28. A process according to at least one of Claims 13 to 27,
**characterised in that** lignosulphonic acid or red mud is added to compact the stabilised compost.

29. A process according to at least one of Claims 13 to 28,
**characterised in that** the stabilised compost undergoes drying before being compacted.

## Revendications

1. Décharge, caractérisée par un dépôt compacté de déchets d'origines diverses préalablement stabilisés du point de vue microbien de cette manière qu'il ne se passe plus de métabolism microbien dans des conditions anaérobie, par la suite compost stable.

2. Décharge selon la revendication 1, caractérisée par au moins deux compartiments avec un dépôt de compost stable compacté et une couche intermédiaire entre les compartiments, qui présente des propriétés de consolidation, de sorption et/ou de tampon.

3. Décharge selon la revendication 1 ou 2, caractérisée par un fond de décharge constitué d'une matière présentant des propriétés de consolidation, de sorption et/ou de tampon.

4. Décharge selon l'une au moins des revendications précédentes, caractérisée en ce que la surface de la décharge est recouverte d'une matière présentant des propriétés de consolidation, de sorption et/ou de tampon.

5. Décharge selon l'une au moins des revendications précédentes, caractérisée en ce que le compost stable est mélangé à des moyens de densification contribuant au compactage, en particulier structurants.

6. Décharge selon la revendication 5, caractérisée en ce que les moyens de densification structurants sont des matières présentant des propriétés de consolidation, de sorption et/ou de tampon.

7. Décharge selon l'une des revendications 2 à 6, caractérisée en ce que la couche intermédiaire, le fond de la décharge, le revêtement de surface de la décharge et/ou les moyens de densification structurants contiennent des agrégats organiques et/ou inorganiques, ou sont constitués de ceux-ci, en particulier de bois déchiqueté, de lignocellulose, de mélanges minéraux, d'argile ou d'un mélange de ceux-ci.

8. Décharge selon la revendication 7, caractérisée en ce que les agrégats sont mélangés à du compost stable.

9. Décharge selon la revendication 7 ou 8, caractérisée en ce que les agrégats sont des mélanges minéraux chargés en calcaire.

10. Décharge selon la revendication 9, caractérisée en ce que les mélanges minéraux chargés en calcaire sont mélangés à des additifs supplémentaires, tels que du sulfate de fer.

11. Décharge selon l'une au moins des revendications 2 à 10, caractérisée en ce que la couche intermédiaire, le fond de la décharge, le revêtement de surface de la décharge et/ou les moyens de densification structurants contiennent ou consistent en des matières ou des agrégats traités par le procédé de DCR (Dispersed Chemical Reaction).

12. Décharge selon l'une au moins des revendications précédentes, caractérisée par un compost stable traité par le procédé de DCR.

13. Procédé de fabrication d'une décharge, caractérise en ce que des déchets d'origines diverses préalablement stabilisés du point de vue microbien du cette manière qu'il ne se passe plus de métabolism microbien dans des conditions anaèrobie, par la suite compost stable, sont déposés sous forme compactée.

14. Procédé selon la revendication 13, caractérisé en ce que le compost stable est déposé sous forme compactée par couches.

15. Procédé selon la revendication 13 ou 14, caractérisé en ce que le compost stable est précomprimé et/ou passé au rouleau sur place.

16. Procédé selon l'une au moins des revendications 13 à 15, caractérisé en ce que le compost stable est déposé sous forme compactée dans au moins deux compartiments et en ce que les deux compartiments sont séparés l'un de l'autre par au moins une couche intermédiaire présentant des propriétés de consolidation, d'absorption et/ou de tampon.

17. Procédé selon au moins l'une des revendications 13 à 16, caractérisé par l'utilisation d'un fond de décharge en une matière présentant des propriétés de consolidation, de sorption et/ou de tampon.

18. Procédé selon au moins l'une des revendications 13 à 17, caractérisé par l'utilisation d'un revêtement de surface en une matière présentant des propriétés de consolidation, de sorption et/ou de tampon.

19. Procédé selon au moins l'une des revendications 13 à 18, caractérisé en ce que le compost stable est mélangé à des moyens de densification contribuant au compactage, en particulier structurants.

20. Procédé selon la revendication 19, caractérisé en ce qu'on utilise comme moyens de densification des matières ayant des propriétés de consolidation, de sorption et/ou de tampon.

21. Procédé selon l'une au moins des revendications 16 à 20, caractérisé en ce que la couche intermédiaire, le fond de la décharge, le revêtement de surface de la décharge et/ou les moyens de densification structurants sont mélangés à des agrégats organiques et/ou inorganiques, ou sont constitués de ceux-ci, en particulier de bois déchiqueté, de lignocellulose, de mélanges minéraux, d'argile ou d'un mélange de ceux-ci.

22. Procédé selon la revendication 21, caractérisé en ce que les agrégats sont mélangés à du compoststable.

23. Procédé selon la revendication 21 ou 22, caractrisé en ce qu'on utilise comme agrégats des mélanges minéraux chargés en calcaire.

24. Procédé selon la revendication 23, caractérisé en ce que les mélanges minéraux chargés en calcaire sont mélangés à des additifs supplémentaires, tels que du sulfate de fer.

25. Procédé selon l'une au moins des revendications 16 à 24, caractérisé en ce qu'on utilise pour la fabrication de la couche intermédiaire, du fond de la décharge, du revêtement de surface de la décharge et/ou des moyens de densification structurants, des matières traitées par le procédé de DCR (Dispersed Chemical Reaction).

26. Procédé selon l'une des revendications 13 à 25, caractérisé en ce que le compost stable est lui-même traité par le procédé de DCR.

27. Procédé selon l'une au moins des revendications 13 à 26, caractérisé en ce que le compost stable est compacté, respectivement condensé, par envasement.

28. Procédé selon l'une au moins des revendications 13 à 27, caractérisé en ce que pour le compactage du compost stable, on ajoute de l'acide lignosulfonique ou de la boue rouge.

29. Procédé selon l'une au moins des revendications 13 à 28, caractérisé en ce que le compost stable est soumis avant son compactage à une dessiccation.
